# EUROPÄISCHE PATENTSCHRIFT

(11) **EP 3 123 198 B1**
(45) Veröffentlichungstag und Bekanntmachung des Hinweises auf die Patenterteilung: **22.08.2018**
(21) Anmeldenummer: 15713390.1
(22) Anmeldetag: 04.03.2015
(51) Int. Cl.: G01S 7/28, G01S 13/42, H05B 37/02

(54) **BEWEGUNGSSENSORVORRICHTUNG SOWIE VERWENDUNG EINER SOLCHEN**
MOTION SENSOR DEVICE AND USE THEREOF
DISPOSITIF DÉTECTEUR DE MOUVEMENT ET SON UTILISATION

(30) Priorität: 27.03.2014 DE 102014104299
(43) Veröffentlichungstag der Anmeldung: 01.02.2017
(73) Patentinhaber: Steinel GmbH, 33442 Herzebrock (DE)
(72) Erfinder: MÖLLER, Thomas, 32049 Herford (DE); CAPALINI, Richard, 53501 Prelouc (CZ)
(74) Vertreter: Patentanwälte Behrmann Wagner PartG mbB
(86) Internationale Anmeldenummer: PCT/EP2015/054492
(87) Internationale Veröffentlichungsnummer: WO 2015/144403

(56) Entgegenhaltungen:
- EP-A2- 1 746 436
- JP-A- 2007 071 605
- US-A1- 2003 164 790
- US-A1- 2012 188 081

## Beschreibung

Die vorliegende Erfindung betrifft eine Bewegungssensorvorrichtung nach dem Oberbegriff des Hauptanspruchs. Ferner betrifft die vorliegende Erfindung eine Verwendung einer solchen Bewegungssensorvorrichtung innerhalb einer Wand- oder Deckenleuchte.

Aus dem Stand der Technik ist es bekannt, Sensoren zur Bewegungserfassung in Form verschiedenster Erfassungstechnologien und zugehöriger technischer Prinzipien einzusetzen, wobei eine Verwendung eines solchen Bewegungserfassungssensors zur Aktivierung einer Leuchte eine gängige und häufige Anwendung darstellt. So ist es etwa zur Bewegungserfassung im Innen- und Außenbereich (etwa bezogen auf ein Gebäude, an welchem eine gattungsgemäße Bewegungssensorvorrichtung, allein oder in Verbindung mit einer Leuchteneinheit, montiert ist) bekannt und etabliert, zur Beleuchtungssteuerung sogenannte PIR-(Passiv-Infrarot-)Sensoren einzusetzen, welche auf der Basis detektierter Infrarotstrahlung im Erfassungsbereich (genauer: einer sich durch die Bewegung eines zu detektierenden Erfassungsobjekts ändernden Infrarotstrahlung im Bild des Erfassungsbereichs) ein Erfassungssignal zu erzeugen und als Reaktion darauf dann den nachgeschalteten Verbraucher zu aktivieren. Allerdings besitzen derartige, auf dem Infrarotprinzip basierende Vorrichtungen auch Nachteile; so ist zunächst ein wirksamer Erfassungsbereich, d.h. ein durch einen maximalen Abstand eines zuverlässig zu detektierenden Erfassungsobjekts einer bestimmten Mindestgröße bestimmter Bereich, prinzipbedingt begrenzt. Auch sind infrarotbasierte Sensoren gegenüber Umwelteinflüssen, etwa Änderungen in den Temperatur- und/oder Lichtverhältnissen, beeinflussbar und führen zu potentiell unerwünschten Fehlaktivierungen.

Insbesondere mit dem Zweck einer Beleuchtungssteuerung etablieren sich als Alternative zur PIR-Sensorik zunehmend Hochfrequenz- bzw. Radarsensoren, welche auf der Basis einer Änderung reflektierter und detektierter Hochfrequenzwellen arbeiten und zu diesem Zweck üblicherweise das Doppler-Prinzip ausnutzen, d.h. eine durch eine Bewegung (bzw. Bewegungsgeschwindigkeit) eines zu detektierenden Erfassungsobjekts im Erfassungsbereich bewirkte und zur Detektion ausgewertete Frequenzverschiebung des Hochfrequenzsignals. Allerdings ist auch eine solche Hochfrequenztechnologie - prinzipbedingt - mit Nachteilen behaftet, so ist etwa eine Detektorempfindlichkeit (und damit auch eine Bewegungserfassungsempfindlichkeit) davon abhängig, in welcher (Bewegungs-)Richtung sich das Erfassungsobjekt relativ zum Sensor bewegt: Eine Objektbewegung in Richtung auf den Sensor zu bzw. radial von diesem sich entfernen bewirkt etwa ein völlig anderes Dopplersignal als etwa ein sich tangential im Erfassungsbereich bewegendes Objekt. Gleichermaßen Probleme macht etwa ein durch einen Sensor nur schwer detektierbarer Unterschied zwischen einem relativ kleinen, sich in der Nähe des Sensors bewegenden Erfassungsobjekt im Vergleich zu einem relativ großen, in weiterer Entfernung (und potentiell sogar außerhalb eines gewünschten Erfassungsbereichs) sich bewegenden Objekt. Schließlich führt die bei Hochfrequenzsignalen vorliegende Eigenschaft, Materialen durchdringen zu können, zu unerwünschten Eigenschaften eines Bewegungssensors; ggf. auch auf Bewegungen zu reagieren, welche sich hinter einer Wand od.dgl. Absperrung ohne Relevanz für einen Detektionszweck ereignen.

Zur Überwindung der Nachteile hochfrequenzbasierter Detektormittel zur Bewegungserfassung sieht die als gattungsbildend und oberbegrifflich anzusehende DE 10 2012 103 177 A1 der Anmelderin vor, zwei zueinander beabstandet vorzusehende Doppler-Hochfrequenzdetektoren so anzusteuern und auszuwerten, dass aus einem kombinierten Detektorsignal nicht nur ein einfaches, zur Bewegungserfassung auswertbares Dopplersignal gewonnen wird, vielmehr ermöglicht es diese Technologie, sowohl einen momentanen Positionswinkel eines Erfassungsobjekts als Winkelsignal, als auch einen momentanen Abstand des Erfassungsobjekts von einem zugeordneten Sensorgehäuse als Abstandssignal zu generieren. Damit besteht dann die Möglichkeit, aus einer Auswertung dieser gewonnenen Signale etwa einen definierten maximalen Abstand des Erfassungsbereichs zum Sensorgehäuse auszuwerten und festzulegen, so dass insoweit ein Erfassungsbetrieb der Bewegungssensorvorrichtung ermöglicht ist, welcher gegenüber den vorbeschriebenen Störeinflüssen unempfindlich ist und ein genaues, reproduzierbares Erfassungsverhalten zeigt.

Allerdings ist auch diese, in der DE 10 2012 103 177 A1 beschriebene Technologie im Hinblick auf ihre Konfigurierbarkeit und Bedienungsfreundlichkeit noch verbesserungsbedürftig; so ist es etwa schwierig, durch eine Bedienperson einer derartigen, bekannten Außensensorvorrichtung einen Erfassungsbereich in einer Bewegungsebene einzustellen bzw. vorzugeben, welcher nicht kreisbogenförmig und radialsymmetrisch zum Sensorgehäuse als Ausgangspunkt für die Sensorfunktionalität ist. Damit eignet sich die bekannte Technologie insbesondere dann auch schlecht für eine Verwendung im Konsumgüterbereich, wo neben günstigen Herstellungskosten insbesondere auch eine einfache Bedienbarkeit, bevorzugt ohne die Notwendigkeit schriftlicher Anweisungs- oder Benutzungsunterlagen, erfolgskritisch sein kann.

Aus der EP 1 746 436 A2 ist eine Bewegungssensorvorrichtung als Bewegungsmelder bekannt, welcher neben Merkmalen des Hauptanspruchs insbesondere auch Vergleichsmittel offenbart, die zum Vergleichen eines von Detektormitteln für ein Erfassungsobjekt erzeugten Winkelsignals mit Daten einer vorgegebenen Grenze eines Erfassungsbereichs ausgebildet ist. Eine vergleichbare Technologie offenbart die US 2012/0188081 A1, wo auf der Basis dreidimensionaler Koordinateninformationen als Objekt in einem Erfassungsbereich eine Gegenwart einer Person in einem Kartensystem bestehend aus mehreren Zonen erfolgen kann und als Ergebnis einer derartigen Detektion eine nachgeschaltete Vorrichtung in Form einer Beleuchtungsvorrichtung aktiviert werden kann.

Aufgabe der vorliegenden Erfindung ist daher, eine Bewegungssensorvorrichtung nach dem Oberbegriff des Patentanspruchs 1 bedienungsfreundlicher, einfach handhabbar und insbesondere durch ungeschulte oder leicht zu schulende Bedienpersonen beliebig und flexibel konfigurierbar zu machen, dabei insbesondere auch die Möglichkeiten für eine Einstellung von Erfassungsbereichen zu schaffen, weiche - etwa bezogen auf eine in den Erfassungsbereich hineinragende Mittelachse - nicht symmetrisch ausgestaltet ist und auch in komplexe Erfassungsbereiche bzw. nicht durch einen einfachen Linienverlauf abbildbare Erfassungsbereiche konfiguriert werden kann.

Die Aufgabe wird durch die Bewegungssensorvorrichtung mit den Merkmalen des Hauptanspruchs gelöst. Vorteilhafte Weiterbildungen der Erfindung sind in den Unteransprüchen beschrieben. Schutz im Rahmen der Erfindung wird zudem beansprucht für eine Verwendung der erfindungsgemäßen Bewegungssensorvorrichtung innerhalb einer Wand- oder Deckenleuchte oder zum Ansteuern einer solchen Wand- bzw. Deckenleuchte, wobei im Rahmen dieser Verwendung dann mit einer geeigneten (drahtgebundenen oder drahtlosen) Verbindung zwischen der Bewegungssensorvorrichtung und der Leuchte eine entsprechende Aktivierungs- bzw. Steuerfunktionalität ausgelöst werden kann.

In erfindungsgemäß vorteilhafter Weise setzt die erfindungsgemäße Bewegungssensorvorrichtung Detektormittel ein, die zum Erzeugen eines dem Erfassungsobjekt entsprechenden elektronischen Abstands- und Winkelsignals ausgebildet sind. Erfindungsgemäß entspricht dabei das Abstandssignal einem momentanen Abstand des Erfassungsobjekts zu dem geeignete Sensorelektronik sowie etwaige Antennen der Detektormittel aufnehmenden Sensorgehäuse. Auch entspricht das erfindungsgemäße Winkelsignal einem momentanen Positionswinkel des Erfassungsobjekts in einer Bewegungsebene des Erfassungsobjekts (vorteilhaft bezogen auf eine Referenzlinie, wie sie etwa durch eine Referenzfläche des Sensorgehäuses beschreiben sein kann). Die Bewegungsebene entspricht wiederum bevorzugt im Rahmen der Erfindung der als (plan bzw. eben anzunehmende) (Erd-)Bodenoberfläche oder einer parallel zu dieser verlaufenden Ebene; in der praktischen Realisierung der Erfindung würde insoweit die erfindungsgemäße Bewegungsebene dann eine parallel zum Erdboden und in Höhe einer Befestigung des Sensorgehäuses verlaufende Ebene beschreiben.

Derartige Detektormittel sind bevorzugt als Hochfrequenz-Detektormittel zu realisieren, wobei für eine Realisierung dieser Hochfrequenz-Detektormittel der zugehörige Offenbarungsgehalt der DE 10 2012 103 177 A1 als zur Erfindung gehörig in die vorliegende Offenbarung einbezogen gelten soll; diese (selbst wiederum als oberbegrifflich und gattungsbildend vorausgesetzte) Technologie beschreibt, wie (neben weiteren Ausgangssignalen) auch das erfindungsgemäße Abstands- sowie Winkelsignal in der Realisierung gewonnen werden kann. Allerdings ist die vorliegende Erfindung nicht auf derartige Hochfrequenz-Detektormittel zur Realisierung der erfindungsgemäßen Detektormittel beschränkt, vielmehr sind auch andere Detektormittel möglich, welche in der erfindungsgemäß notwendigen Weise das Abstandssignal sowie das Winkelsignal erzeugen; entsprechend käme als mögliche technologische Alternative etwa ein Bilderfassungssystem in Betracht, welches, etwa in Form von zwei stereoskopisch wirkenden und entsprechend um einen bekannten Abstand voneinander beabstandeten Bildaufnehmern, gleichermaßen in der Lage wäre, die erfindungsgemäßen Signale zu erzeugen. Derartige Bilderfassungs- und Bildverarbeitungssysteme könnten dann wiederum im Bereich des sichtbaren Lichts, alternativ im nicht-sichtbaren Spektralbereich, etwa im Infrarotbereich, wirken.

Erfindungsgemäß sind nunmehr diesen Detektormitteln Signalverarbeitungs- und Steuermittel nachgeschaltet, die in ansonsten bekannter Weise eine der Bewegungssensorvorrichtung nachzuschaltende Vorrichtung (welche selbst nicht notwendigerweise Gegenstand der Erfindung ist) in Abhängigkeit von dem Abstandssignal und von dem Winkelsignal aktivieren. Diese Signalverarbeitungs- und Steuermittel weisen erfindungsgemäß Erfassungsbereichsbestimmungsmittel auf, die eine durch eine Bedienperson einstell-, konfigurier- bzw. betätigbare Schnittstelleneinheit aufweisen, mit welcher die Bedienperson auf den Erfassungsbereich einwirken kann bzw. diesen geeignet vorgibt und/oder bestimmt.

In erfindungsgemäß vorteilhafter Weise weisen nunmehr diese Signalverarbeitungs- und Steuermittel Vergleichsmittel auf, die zum Vergleichen eines von den Detektormitteln für ein Erfassungsobjekt erzeugten Abstands- und Winkelsignals mit Daten einer vorgegebenen bzw. eingestellten Grenze des Erfassungsbereichs ausgebildet sind. Dabei ist diese vorgebbare bzw. einstellbare Grenze des Erfassungsbereichs, bezogen auf das Sensorgehäuse, in der Bewegungsebene sowohl frontal (d.h. bezogen auf eine sich von einer Sensorgehäusefläche erstreckenden Normalen) als auch seitlich vorgeb- bzw. einstellbar, so dass entsprechend flexibel und situationsgerecht das Verändern des Erfassungsbereichs durch die Bedienperson erfolgen kann.

Dabei ist es bevorzugt, die Schnittstelleneinheit sowie die Vergleichsmittel so auszugestalten, dass das Einstellen einer sich über einen Erstreckungswinkel von mindestens 150°, bevorzugt mindestens 170°, in der Bewegungsebene (oder parallel zu dieser) erstreckenden Grenze ermöglicht ist; auf diese Weise lässt sich in (flächenmäßig) umfassender Weise der Erfassungsbereich abstecken.

Auch ist es weiterbildungsgemäß vorteilhaft im Rahmen der Erfindung ermöglicht, dass durch Wirkung der Schnittstelleneinheit und durch Einstellen an dieser bzw. von dieser, die Grenze in der Bewegungsebene einen ersten bogenförmigen Abschnitt in einer ersten Bogenform und (mindestens) einen zweiten bogenförmigen Abschnitt mit einer von der ersten Bogenform verschiedenen zweiten Bogenform aufweist. Diese Bogenformen schließen bevorzugt zum Ausbilden eines stetigen Kurvenverlaufs aneinander an, mit der vorteilhaften Wirkung, dass in einfach nachvollziehbarer und einfach umsetzbarer Weise die erfindungsgemäß flexible Veränderlichkeit sowohl frontal als auch seitlich im Erfassungsbereich erfolgen kann. Dabei ist es weiter bevorzugt, diese jeweiligen Bogenformen in Abschnitten kreisbogenförmig, ellipsenförmig oder paraboloid auszugestalten; nicht nur gestatten diese Bogenformen eine einfache mathematischkonstruktive Ausgestaltung der Geometrie (mit entsprechend reduzierten Anforderungen an eine rechnerische Auswertung bei Vergleichsoperationen im Rahmen der erfindungsgemäßen Vergleichsmittel), auch sind diese Formen durch eine Bedienperson einfach nachzuvollziehen und anzuordnen und entsprechen vielen tatsächlichen geometrischen Gegebenheiten an einem Einsatzort.

In bedienungstechnisch besonders bevorzugter Weise sind den Schnittstelleneinheiten mindestens zwei durch die Bedienperson manuell betätigbare Einstellmittel zugeordnet, wobei diese besonders bevorzugt, da günstig bedien- und herstellbar, als Dreh- und/oder Schiebeknöpfe ausgebildet sind; mit diesen kann dann die Bedienperson einen maximalen Erfassungsabstand entlang einer jeweils zugeordneten, in der Bewegungsebene oder parallel zu dieser von dem Sensorgehäuse verlaufenden Achse einstellen. Diese (mindestens) zwei Achsen spannen zueinander (in der Bewegungsebene) einen Winkel von mindestens 45° auf; in der Praxis ist es bevorzugt, bei drei vorzusehenden Achsen (mit jeweils zugeordnetem Dreh- bzw. Schiebeknopf) diese voneinander um jeweils 90° zu beabstanden, so dass dann in der Bewegungsebene insgesamt 180° aufgespannt werden.

Während es einerseits im Rahmen der Erfindung vorteilhaft und gleichermaßen bevorzugt ist, einen (etwa entsprechend der vorbeschriebenen bevorzugten Realisierungsformen) geeignet durch Einstellen eines maximalen axialen Abstands bestimmbaren Erfassungsbereich durch Kurvenverläufe bzw. (aneinander anschließende) Kurvenbahnen zu beschreiben, ist es alternativ oder ergänzend bevorzugt, durch geeignete Konfiguration der Schnittstelleneinheit die Grenze der Bewegungsebene (bzw. einen Abschnitt dieser Grenze) linear auszugestalten. Dabei ist es wiederum ermöglicht, eine derartige Grenze rechteckförmig, als Polygon oder als andere Struktur mit (gleichmäßigen oder eine unterschiedliche Länge aufweisenden) linearen Streckenabschnitten auszugestalten; auch können diese, insoweit als Mischform mit dem vorbeschriebenen Ausführungsbeispiel der Kurvenverläufe, abschnittsweise kurvenförmig mit den exemplarisch angegebenen funktionalen Verläufen ausgestaltet sein.

In wiederum für die Bedienung besonders günstiger Weise ist weiterbildungsgemäß vorgesehen, der Schnittstelleneinheit Darstellungs- und/oder Visualisierungsmittel zum optischen Darstellen bzw. Ausgeben der Grenze zuzuordnen. Dies ist beispielsweise in der praktischen Realisierung dadurch lösbar, dass der Bedienperson das Ergebnis des Einstellvorgangs, nämlich ein konkreter Grenzverlauf des Erfassungsbereichs, auf einem geeignet zugeordneten Bildschirm dargestellt werden kann, idealerweise zusätzlich in Verbindung mit einer Abbildung einer Schemadarstellung des konkreten Einsatzumfeldes. Eine derartige Bildschirmvorrichtung kann entweder unmittelbar Gegenstand der erfindungsgemäßen Bewegungssensorvorrichtung in höherwertiger Ausgestaltung sein, ergänzend oder alternativ durch Anbindung gängiger (bevorzugt portabler) Datenverarbeitungsmittel, wie etwa Smartphones, Tablets, PCs od.dgl. über geeignete Schnittstellen erfolgen, so dass eine visuelle Ausgabe die Einstellmöglichkeiten unterstützt. Wiederum weiterbildungsgemäß wäre es denkbar, dass die als Dreh- bzw. Schiebeknöpfe realisierten Einstellmittel dann ersetzt werden könnten durch die Möglichkeit für die Bedienperson, durch Gestensteuerung oder vergleichbare Betätigungen eines komplexen zweidimensionalen Dateneingabevorgangs (wie etwa auf einem berührungsempfindlichen Bildschirm, einem Touchpad od.dgl. Sensor) eine Grenzbestimmung vollständig oder abschnittsweise vorzunehmen, auch können diese Möglichkeiten kombiniert werden, wobei wiederum derartige Eingabemöglichkeiten unmittelbar an der Bewegungssensorvorrichtung gemäß weiterer Ausgestaltungen vorgesehen sein können, alternativ oder ergänzend wiederum im Rahmen der angebundenen (bevorzugt portablen) Datenverarbeitungseinheiten mit entsprechenden Benutzerschnittstellen.

Eine gerade für komplexe Einsatz- und Einrichtungsumgebungen sinnvolle und leistungsfähige Weiterbildung der Erfindung besteht erfindungsgemäß darin, der Schnittstelleneinheit Lern- und/oder Einrichtemittel so zuzuordnen, dass in einem durch diese Lern- bzw. Einrichtemittel bewirkten Lernmodus ein Bewegungspfad einer Person in der Bewegungsebene als Grenze des Erfassungsbereichs durch die Schnittstelleneinheit detektiert und gespeichert wird. In der praktischen Realisierung würde also bei Aktivierung eines derartigen Lern- bzw. Einrichtemodus die (Bedien-)Person geeignet in der Bewegungsebene einen Pfad abschreiten, dieser Pfad würde durch die erfindungsgemäße Bewegungssensorvorrichtung verfolgt, abgebildet und dann als Grenze bzw. Grenzverlauf des Erfassungsbereichs interpretiert, so dass dieser Verlauf dann für den zukünftigen Erfassungsbetrieb zur Verfügung steht.

Während sich die vorliegende Erfindung günstig zur Ansteuerung von bzw. zum Betrieb mit Leuchtenvorrichtungen verschiedenster Arten eignet, ist die vorliegende Erfindung gleichwohl nicht auf diesen günstigen Verwendungszweck beschränkt. Vielmehr eignet sich die vorliegende Erfindung auch für zahlreiche andere Zwecke einer Bewegungserfassung. So würden etwa Anwendungen auf dem Gebiet der elektronischen Alarmtechnik, wobei etwa das Erreichen bzw. Überschreiten des Erfassungsbereichs durch das Erfassungsobjekt einen Alarm auslöst, gleichermaßen zu vorteilhaften Anwendungsgebieten der Erfindung zählen, wie etwa Anwendungen aus dem Marketing, der Verkehrsbeobachtung oder anderen Kontexten, bei denen potentiell relevante Erfassungsobjekte verschiedenen Bewegungs- und Erfassungspositionen im Erfassungsbereich zugeordnet werden und so aus dem Bewegungsverhalten der Bewegungsobjekte auf mögliche Vorlieben (etwa relativ vor einer Vielzahl von Schaufenstern od.dgl.) geschlossen werden kann. Entsprechende Auswertemöglichkeiten sind potentiell unbegrenzt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Blockschaltbild der Bewegungssensorvorrichtung gemäß einer ersten bevorzugten Ausführungsform der Erfindung;
- Fig. 2a bis Fig. 2d:: verschiedene Varianten in der Einstellung des Erfassungsbereichs entlang dreier Achsen im Ausführungsbeispiel der Fig. 1 und
- Fig. 3:: eine Schemadarstellung auf eine einer Bedienperson zugewandte Außenfläche einer Benutzerschnittstelle mit dort erkennbaren Einstell-Drehknöpfen.

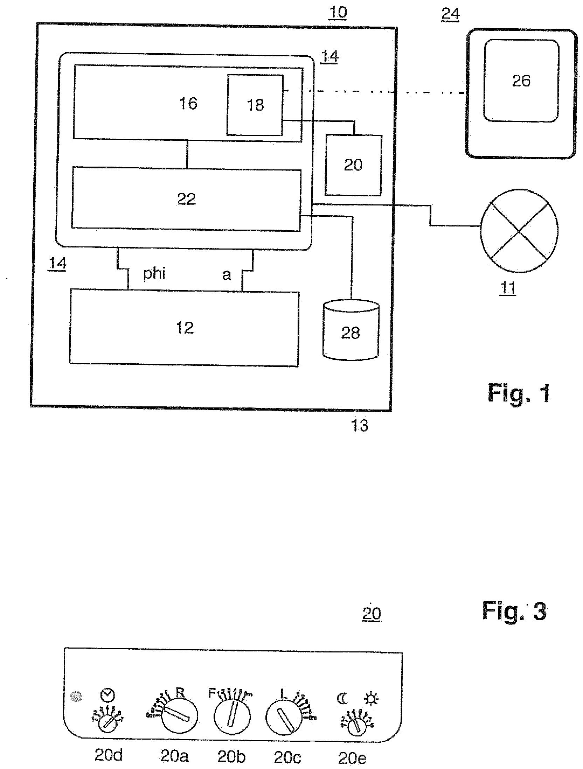

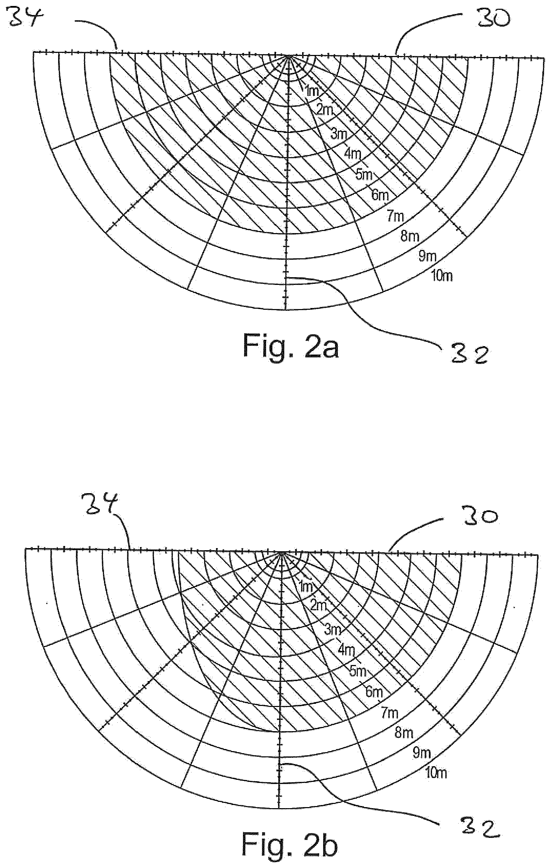

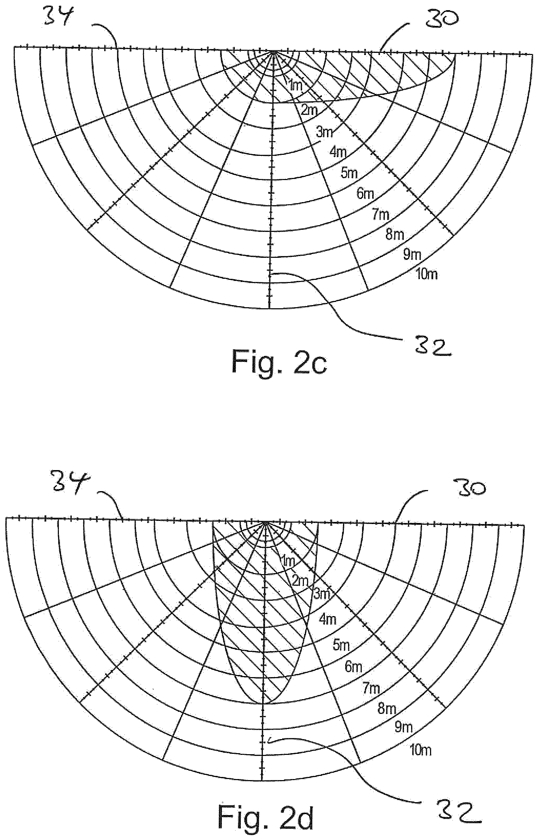

Die Fig. 1 zeigt im schematischen Blockschaltbild ein erstes bevorzugtes Ausführungsbeispiel der Bewegungssensorvorrichtung der vorliegenden Erfindung. In einem durch die Umrandungslinie 10 angedeuteten Gehäuse, welches geeignet an einer Wand, einer Decke od.dgl. festgelegt sein kann, sind Detektormittel 12 in Form einer auf Hochfrequenzbasis wirkenden Bewegungssensorvorrichtung vorgesehen; derartige Detektormittel als Hochfrequenz-Bewegungssensor offenbart die DE 10 2012 103 177 A1 der Anmelderin, welche im Hinblick auf die konstruktive Realisierung einer derartigen Bewegungssensorvorrichtung, eingeschlossen die Realisierung der Funktionskomponenten gemäß Fig. 1 dieser Druckschrift, der Hochfrequenz-Hardware gemäß Fig. 2 dieser Schrift sowie der Signalverarbeitungsfunktionalität gemäß Fig. 3, 4 dieser Schrift mit jeweils zugehörigen Beschreibungsteilen als zur vorliegenden Offenbarung gehörig in die vorliegende Anmeldung einbezogen gelten soll. Dergestalt ausgebildete Detektormittel wirken zusammen mit Signalverarbeitungs- und Steuermitteln 14, welche von den Hochfrequenzdetektormittein 12 ein Abstandssignal a sowie ein Winkelsignal phi eines Erfassungsobjekts erhalten, welches sich in einem Erfassungsbereich vor einer Gehäuseaußenfläche 13 (die in Fig. 1 gezeigte Linie gilt gleichermaßen als Referenzlinie für eine Abstands- und Winkelbemessung) befindet. Die Signalverarbeitungs- und Steuermittel 14 sind zum Aktivieren einer schematisch gezeigten Leuchten- bzw. Lampeneinheit 11 ausgebildet, nämlich dann, wenn in nachfolgend zu beschreibender Weise die Vorrichtung feststellt, dass sich ein zu detektierendes Erfassungsobjekt innerhalb einer eingestellten bzw. vorbestimmten Grenze des Erfassungsbereichs befindet.

Zu diesem Zweck weisen die Signalverarbeitungs- und Steuermittel Erfassungsbereichs-Bestimmungsmittel 16 auf, die wiederum eine Schnittstelleneinheit 18 aufweisen. Die Erfassungsbereichsbestimmungsmittel wirken zusammen mit Vergleichsmitteln, welche auf der Basis von in einer Speichereinheit 28 gespeicherten, eine Grenze des Erfassungsbereichs beschreibenden Daten diese Feststellung ermöglichen, nämlich ob ein aktuell erfasstes Erfassungsobjekt (mit zugeordneten Abstandsdaten (a) bzw. Winkeldaten (phi)) in den vorbestimmten Erfassungsbereich fällt.

Dieser Erfassungsbereich ist im gezeigten Ausführungsbeispiel durch benutzerseitige Betätigung von manuellen Einstellmitteln 20 einstell- und konfigurierbar (wobei diese Bedieneinheit in der Fig. 3 weiter im Detail erläutert ist); im gezeigten Ausführungsbeispiel ist mit der Schnittstelleneinheit 18, neben der Bedieneinheit 20, zusätzlich eine mobile Datenverarbeitungseinheit 24 drahtlos angebunden, welche über einen schematisch gezeigten, berührungsempfindlichen Bildschirm 26 nicht nur eine visuelle Darstellung bzw. Ausgabe eines Erfassungsbereichs mit dessen aktuellen Grenzen gestattet, sondern zusätzlich, durch den berührungsempfindlichen Bildschirm, eine alternative Einstellmöglichkeit zu den nachfolgend im Detail zu beschreibenden Stellreglern der Einheit 20 beschreibt, wiederum alternativ eine Manipulation derart voreingestellter Grenzverläufe gestattet.

Konkret sieht das Ausführungsbeispiel der Fig. 1, Fig. 3 vor, dass die Grenze des Erfassungsbereichs für die Sensormittel 12 mittels dreier Stellregler 20a, 20b, 20c durch manuelle Betätigung eingestellt werden kann; Entsprechend ist diese Bedieneinheit 20 geeignet von außen zugreifbar am Gehäuse vorgesehen, bzw. unter einer zu öffnenden bzw. entfernbaren Abdeckung vorgesehen. Die weiteren Stellregler 20d und 20e beschreiben ansonsten bekannte Einzelmöglichkeiten einer Einstelfdauer der Leuchtmittel 11 (20d) bzw. eine Dämmerungsschalterfunktionalität (20e) für eine Helligkeitsschwelle der Aktivierung der Leuchteneinheit 11, insoweit zum Verhindern einer Aktivierung dieser Einheit 11 selbst bei Feststellung eines Objekts im Erfassungsbereich, wenn ein Pegel einer Umgebungshelligkeit die Lampenaktivierung 11 unnötig macht.

Anhand der exemplarischen Einstellungsvarianten der Grenze des Erfassungsbereichs, dargestellt in den Fig. 2a bis 2d, wird die erfindungsgemäße Einstellung bzw. Vorgabe des Erfassungsbereichs im bevorzugten Ausführungsbeispiel der drei Stellregler mit jeweils zugeordneten Dimensionen beschrieben. Dabei zeigen die Diagramme der Fig. 2a bis 2d eine Draufsicht auf die Bewegungsebene, in welcher sich ein Erfassungsobjekt bewegt; das Gehäuse 10 der Fig. 1 wurde in dieser Bewegungsebene bündig zur jeweils oberen, horizontal verlaufenden Linie angesetzt und in den Mittelpunkt platziert, so dass die in der Fig. 1 erkennbare Kantenlinie 13 des Gehäuses mit der jeweiligen oberen horizontalen Linie der Fig. 2a bzw. 2d überlappt.

Innerhalb dieser Geometrie ermöglichen es nunmehr die Stellregler 20a, 20b und 20c, dass entlang einer in der Figurenebene der Fig. 2 horizontal und rechts verlaufenden ersten Achse 30 eine erste maximale Erfassungsweite eingestellt werden kann, wobei im gezeigten Ausführungsbeispiel, insoweit auch entsprechend einer in der Fig. 3 erkennbaren Skalierung der jeweiligen Drehregler 20a bis 20c, der Drehregler 20a (R = rechts) bis zu einer derartigen maximalen Erfassungsweite von 6m entlang der ersten Achse 30 eingestellt werden kann. Gleichermaßen sieht eine dem zweiten Drehregler 20b (markiert mit dem Buchstaben F = frontal) vor, dass bis zu einer Erfassungsweite von maximal 6m entlang einer zweiten Achsenrichtung 32, in der Figurenebene dann abwärts gerichtet und einen Winkel von 90° gegenüber der ersten Achse 30 aufspannend, ein frontaler Erfassungsbereich eingestellt werden kann. Der dritte Steilregler 20c, insoweit zugeordnet einer dritten Achse 34 (L = links), welche um weitere 90° gegenüber der zweiten Achse 32 und damit um 180° zur ersten Achse 30 ausgerichtet ist, gestattet auch hier das maximale Einstellen einer Erfassungsweite von 6m. Entsprechend sieht das Ausführungsbeispiel vor, dass ein Erstreckungswinkel in der Erfassungsebene (= Bewegungsebene des Erfassungsobjekts) von 180° aufgespannt wird, wobei, insoweit entsprechend dem Einstellungszustand der Fig. 2a, bei jeweiliger Einstellung einer maximalen Weite von 6m der gezeigte Halbkreis der Fig. 2a für den Erfassungsbereich beschrieben wird. Entsprechend verläuft die Grenze des Erfassungsbereichs zwischen dem schraffierten Bereich - hier erfolgt die Detektion und Aktivierung des Verbrauchers 11 - und dem nicht erfassten Außenbereich.

Gegenüber der Darstellung der Fig. 2a zeigt die Fig. 2b eine alternative Einstellung der Bedieneinheit 20: Während nach wie vor die Stellregler 20a und 20b auf eine (hier maximale) Weite von 6m eingestellt sind, beträgt die eingestellte Erfassungsweite des dritten Stellreglers 20c, insoweit entsprechend einem Abstand auf der nach links weisenden Achse 34, etwas unterhalb von 3m. In der geometrischen bzw. rechnerischen Verarbeitung durch die erfindungsgemäßen Erfassungsbereichsbestimmungsmittel 16 im Rahmen der Einheit 14 wird dieser geänderte Grenzverlauf nunmehr so bestimmt, dass aus den jeweiligen Achseneinstellungen (bzw. den zugeordneten, durch die Stellregler eingestellten Werten) eine Ellipse bestimmt wird: Klar erkennbar ist im Bereich der linken Hälfte der Fig. 2b der elliptische Verlauf zwischen dem Einstellwert 3 (des Stellreglers 20c für die Achse 34) und dem Stellwert 6m des Stellreglers 20b für die Achse 32. Entsprechend ist in der Fig. 2b die Grenze des Erfassungsbereichs durch zwei unterschiedliche Bogenformen im linken und rechten Bereich gekennzeichnet, welche stetig aneinander angrenzen.

Die Fig. 2c und 2d verdeutlichen weitere alternative Konfigurationen bzw. Einstellungen als Beispiel: So ist im Konfigurationsbeispiel 2c die in den Figuren 1, 3 gezeigte Vorrichtung entlang der Achsen 32 und 34 auf einen (hier minimalen) Erfassungsabstand von 1m eingestellt, während entlang der Achse 30 ein maximaler Abstand von 6m eingestellt ist; es entsteht die in der Fig. 2c gezeigte, schmale und nach rechts gerichtete Keule, wobei auch hier die Ellipsenform im rechten Teilbereich des Diagramms der Fig. 2c gegenüber der Viertelkreis-Bogenform im linken Bereich deutlich wird. Schließlich zeigt die Fig. 2d eine Konfigurationsvariante, bei welcher, zum Erzeugen eines schmalen, nach frontal gerichteten Erfassungsbereichs (d.h. mit Erfassungsmaximum entlang der Achse 32), entlang der Achsen 30 und 34 (entsprechend zugeordneten Stellreglern 20a bzw. 20c) lediglich minimale Erfassungsweiten von jeweils 1m eingestellt sind, während nach frontal (Stellregler 20b) eine Erfassungsweite von 6m vorgegeben wird; Im gezeigten Konfigurationsbeispiel der Fig. 2d entsteht eine doppelte Ellipsenform nach jeder Seite (bezogen auf die Achse 32 als angenommener Frontal- und Mittelachse).

Es wird deutlich, dass im gezeigten Ausführungsbeispiel mit lediglich drei einfach und intuitiv zu bedienenden Stellreglern mit hoher Flexibilität, trennscharf und situationsgerecht eine Erfassungsbereichseinstellung der Sensorvorrichtung möglich ist, wobei innerhalb eines weiten und für viele Anwendungsfälle typischen Erfassungswinkels (Erstreckungswinkels) innerhalb der Bewegungsebene ein Bereich von 180° überstrichen werden kann. Dabei ist weder die vorliegende Vorrichtung auf diesen exemplarischen maximalen Erstreckungswinkel von 180° beschränkt, noch auf die exemplarisch herangezogenen maximalen Bereichswerte von jeweils 6m (welche zudem auch untereinander in ihrem jeweiligen Maximum variiert werden können), noch auf die exemplarisch beschriebene Anzahl von drei Achsen, welche in der Bewegungsebene im Beispiel jeweils voneinander um 90° winklig angeordnet sind; in der Konfiguration steht es der Ausgestaltung völlig frei, jeweils geeignete Variationen dieses erfindungsgemäßen Grundgedankens vorzunehmen.

Auch ist die vorliegende Erfindung nicht auf die gezeigte Konfiguration der einzelnen Bögen beschränkt; nicht nur sind diese Bögen hypothetisch anders bestimm-, berechen- und vorgebbar, etwa durch andere - z.B. paraboloide - Bogenformen, auch sieht die Erfindung ergänzend oder alternativ vor, einen Grenzverlauf in der Bewegungsebene zumindest abschnittsweise in Form linearer Streckenabschnitte vorzusehen, wobei diesen Streckenabschnitten dann benachbart Kurven vorgegeben sein können, alternativ ein Erfassungsbereich auch vollständig mit seinen Grenzen durch geeignete Strecken oder Streckenabschnitte beschrieben sein kann. Zu diesem Zweck könnten dann die gezeigten oder weitere Stellregler zum Vorgeben von Positionen dieser Strecken ausgebildet sein, wobei weiterbildungsgemäß die in der Fig. 1 exemplarisch gezeigte Darstellungseinheit 26 als Bildschirm mit zugeordneten Datenverarbeitungsmitteln eine einfache visuelle Überprüfung dieser Einstellmöglichkeiten gestattet. Ergänzend oder alternativ kann zudem eine andere (manuell betätigbare oder mit vorbestimmten Daten oder Datensätzen versehbare) Schnittstelleneinheit das unmittelbare Eingeben einer Grenze vorsehen, etwa dergestalt, dass auf einer auf einer Bildschirmeinheit (z.B. 26) dargestellten Karte od.dgl. Repräsentation eines Bereichs dann durch manuelle Betätigung, z.B. Berührung oder Geste, ein Erfassungsbereich mit seiner Grenze durch eine Bedienperson beschrieben werden kann.

Wiederum ergänzend oder alternativ und in den Ausführungsbeispielen nicht gezeigt ist es vorgesehen, der Steuereinheit 14 geeignete Lern- bzw. Einrichtemittel so vorzusehen, dass diese in einem Einrichtemodus ein kontinuierlich verfolgtes Bewegungssignal einer durch die Detektormittel 12 erfassten Person (als Erfassungsobjekt) als Grenze des Erfassungsbereichs speichern und so dann einem zukünftigen Erfassungsbetrieb zugrunde legen; entsprechend würden auf diese Weise dann wiederum mögliche Vergleichdaten einer Speichereinheit 25 für die Vergleichsmittel 22 erzeugt werden. Auch diese Variante der Erfindung ist jedoch rein exemplarisch und kann je nach Bedürfnissen variiert oder anders ausgestaltet werden.

Auch ist die vorliegende Erfindung nicht auf das exemplarisch in der Fig. 1 mit 11 bezeichnete Leuchtmittel beschränkt; Vielmehr kann die vorliegende Erfindung gleichermaßen als Alarmvorrichtung oder als Bewegungsdetektorvorrichtung für sonstige Beobachtungs-, Überwachungs- oder Kontrollzwecke mit entsprechenden Verbrauchern oder anderen zu aktivierenden Einheiten verwendet werden.

## Patentansprüche

1. Bewegungssensorvorrichtung zur Detektion eines Erfassungsobjekts in einem Erfassungsbereich
mit zu einer Bewegungserfassung des Erfassungsobjekts ausgebildeten und in einem Sensorgehäuse (10) vorgesehenen Detektormitteln (12), insbesondere Hochfrequenzdetektormitteln, die zum Erzeugen eines dem Erfassungsobjekt entsprechenden elektronischen Abstands- (a) sowie Winkelsignals (phi) ausgebildet sind,
wobei das Abstandssignal (a) einem momentanen Abstand des Erfassungsobjekts zu dem Sensorgehäuse (13) entspricht und das Winkelsignal einem momentanen Positionswinkel (phi) des Erfassungsobjekts als Azimutwinkel in einer Bewegungsebene des Erfassungsobjekts parallel zur Bodenoberfläche in einem wandmontierten Zustand der Bewegungssensorvorrichtung entspricht,
und den Detektormitteln nachgeschalteten Signalverarbeitungs- und Steuermitteln (14), die zum Aktivieren einer der Bewegungssensorvorrichtung nachzuschaltenden Vorrichtung (11) in Abhängigkeit von dem Abstandssignal und dem Winkelsignal ausgebildet sind,
wobei die Signalverarbeitungs- und Steuermittel Erfassungsbereichsbestimmungsmittel (16) aufweisen, die eine durch eine Bedienperson einstell-, konfigurier- und/oder betätigbare Schnittstelleneinheit (18, 20) zum zumindest abschnittsweisen Einstellen und/oder Vorgeben einer Grenze des Erfassungsbereichs in der Bewegungsebene aufweisen, wobei die Signalverarbeitungs- und Steuermittel Vergleichsmittel (22) aufweisen, die zum Vergleichen eines von den Detektormitteln für ein Erfassungsobjekt erzeugten Abstands- und Winkelsignals mit Daten einer vorgegebenen bzw. eingestellten Grenze des Erfassungsbereichs ausgebildet sind, die, bezogen auf das Sensorgehäuse, in der Bewegungsebene frontal (32) und seitlich (30, 34) veränderbar vorgeb- und/oder einstellbar ist,
**dadurch gekennzeichnet, daß** der Schnittstelleneinheit (18) Darstellungs- und/oder Visualisierungsmittel (26) zum optischen Darstellen und/oder Ausgeben der Grenze zugeordnet sind.

2. Vorrichtung nach Anspruch 1,
**dadurch gekennzeichnet,**
**dass** die Schnittstelleneinheit zum Einstellen einer sich über einen Erstreckungswinkel von mindestens 150°, bevorzugt mindestens 170°, in der Bewegungsebene und bezogen auf das Sensorgehäuse erstreckenden Grenze des Erfassungsbereichs ausgebildet ist.

3. Vorrichtung nach Anspruch 1 oder 2,
**dadurch gekennzeichnet,**
**dass** die Schnittstelleneinheit so ausgebildet und einstellbar ist, dass die Erfassungsbereichsgrenze in der Bewegungsebene einen ersten bogenförmigen Abschnitt mit einer erste Bogenform und einem zweiten bogenförmigen Abschnitt mit einer von der ersten Bogenform verschiedenen zweiten Bogenform aufweist.

4. Vorrichtung nach Anspruch 3,
**dadurch gekennzeichnet,**
**dass** die erste und/oder die zweite Bogenform kreisabschnittsförmig, ellipsenabschnittsförmig oder paraboloid-abschnittsförmig eingerichtet ist.

5. Vorrichtung nach einem der Ansprüche 1 bis 4,
**dadurch gekennzeichnet,**
**dass** die Schnittstelleneinheit mindestens zwei durch die Bedienperson manuell betätigbare Einstellmittel (20a, 20b, 20c), insbesondere Dreh- oder Schiebeknöpfe, aufweist, die zum Vorgeben eines maximalen Erfassungsabstands entlang einer jeweils zugeordneten, in der Bewegungsebene oder parallel zu dieser von dem Sensorgehäuse verlaufenden Achse (30, 32, 34) ausgebildet sind, wobei die mindestens zwei zugehörigen Achsen zueinander einen Winkel in der Bewegungsebene von mindestens 45°, bevorzugt mindestens 70°, aufspannen.

6. Vorrichtung nach einem der Ansprüche 1 bis 5,
**dadurch gekennzeichnet,**
**dass** die Schnittstelleneinheit so ausgebildet und einstellbar ist, dass die Erfassungsbereichsgrenze in der Bewegungsebene mindestens einen linearen Abschnitt aufweist.

7. Vorrichtung nach Anspruch 6,
**dadurch gekennzeichnet,**
**dass** die Erfassungsbereichsgrenze, bezogen auf das Sensorgehäuse, eine Mehrzahl von bevorzugt rechteckförmig oder polygonal aneinander anschließenden linearen Abschnitten aufweist.

8. Vorrichtung nach einem der Ansprüche 1 bis 7,
**dadurch gekennzeichnet,**
**dass** die Darstellungs- bzw. Visualisierungsmittel zum zusätzlichen Darstellen von Bildelementen innerhalb und/oder außerhalb des Erfassungsbereichs ausgebildet sind.

9. Vorrichtung nach einem der Ansprüche 1 bis 8,
**dadurch gekennzeichnet,**
**dass** der Schnittstelleneinheit Lern- und/oder Einrichtemittel so zugeordnet sind, dass in einem durch die Lern- bzw. Einrichtemittel bewirkten Lernmodus ein Bewegungspfad einer Person in der Bewegungsebene als Grenze des Erfassungsbereichs durch die Schnittstelleneinheit detektiert und gespeichert wird.

10. Verwendung der Bewegungssensorvorrichtung nach einem der Ansprüche 1 bis 9, innerhalb einer Wand- oder Deckenleuchte oder zum Ansteuern einer solchen.

## Claims

1. A motion sensor device for detecting an object of detection in an area of detection,
comprising detector means (12) configured to detect motion of the object of detection and provided in a sensor housing (10), in particular high-frequency detector means which are configured to generate electronic distance (a) and angle (phi) signals corresponding to the object of detection,
the distance signal (a) corresponding to a current distance of the object of detection from the sensor housing (13) and the angle signal corresponding to a current position angle (phi) of the object of detection as an azimuth angle in a motion plane of the object of detection parallel to the ground surface when the motion sensor device is in a wall-mounted state,
and comprising signal-processing and control means (14) connected downstream of the detector means and configured to activate a device (11) to be connected downstream of the motion sensor device as a function of the distance signal and of the angle signal,
the signal-processing and control means having detection area determining means (16) which have an interface unit (18, 20) settable, configurable and/or operable by an operator for setting and/or defining, at least in sections, a boundary of the detection area in the motion plane,
the signal-processing and control means having comparing means (22) which are configured to compare distance and angle signals generated by the detection means for an object of detection with data of a defined or set boundary of the detection area which can be defined and/or set in a variable manner at its front (32) and at its sides (30, 34) in the motion plane in relation to the sensor housing,
**characterized in that**
displaying and/or visualizing means (26) for optically displaying and/or outputting the boundary are associated with the interface unit (18).

2. The device according to claim 1,
**characterized in that**
the interface unit is configured to set a boundary of the detection area that extends across an angle of extension of at least 150°, preferably at least 170°, in the motion plane and in relation to the sensor housing.

3. The device according to claim 1 or 2,
**characterized in that**
the interface unit is configured and can be set in such a manner that the detection area boundary has a first arc-shaped section having a first arc shape and a second arc-shaped section having a second arc shape differing from the first arc shape in the motion plane.

4. The device according to claim 3,
**characterized in that**
the first and/or the second arc shape is configured in the shape of a circle segment, an ellipsis segment or a paraboloid segment.

5. The device according to any one of claims 1 to 4,
**characterized in that**
the interface unit has at least two setting means (20a, 20b, 20c), in particular turning knobs or sliding knobs, which are manually operable by the operator and which are each configured to define a maximum detection distance along an associated axis (30, 32, 34) extending from the sensor housing in the motion plane or parallel thereto, the at least two associated axes forming an angle of at least 45°, preferably at least 70°, to each other in the motion plane.

6. The device according to any one of claims 1 to 5,
**characterized in that**
the interface unit is configured and can be set in such a manner that the detection area boundary has at least one linear section in the motion plane.

7. The device according to claim 6,
**characterized in that**
in relation to the sensor housing, the detection area boundary has a plurality of linear sections that are adjacent to each other preferably in the shape of a rectangle or of a polygon.

8. The device according to any one of claims 1 to 7,
**characterized in that**
the displaying or visualizing means are configured to additionally display picture elements inside and/or outside the detection area.

9. The device according to any one of claims 1 to 8,
**characterized in that**
teaching and/or configuring means are associated with the interface unit in such a manner that when in a teaching mode effected by the teaching or configuring means, the interface unit detects and stores a motion path of a person in the motion plane as the boundary of the detection area.

10. A use of the motion sensor device according to any one of claims 1 to 9 in a wall lamp or a ceiling lamp or for controlling such a lamp.

## Revendications

1. Dispositif détecteur de mouvement pour détecter un objet de détection dans une zone de détection,
comprenant des moyens détecteurs (12) configurés pour détecter le mouvement de l'objet de détection et disposés dans un boîtier (10) du détecteur, notamment des moyens détecteurs à haute fréquence qui sont configurés pour générer des signaux électroniques de distance (a) et d'angle (phi) correspondant à l'objet de détection,
le signal de distance signal (a) correspondant à une distance actuelle de l'objet de détection du boîtier (13) du détecteur et le signal d'angle correspondant à un angle de position (phi) actuel de l'objet de détection comme angle d'azimut dans un plan de mouvement de l'objet de détection parallèle à la surface du sol quand le dispositif détecteur de mouvement est en état monté sur un mur,
et comprenant des moyens (14) de traitement de signal et de commande connectés en aval des moyens détecteurs et configurés pour activer un dispositif (11) à connecter en aval du dispositif détecteur de mouvement en fonction du signal de distance et du signal d'angle,
les moyens de traitement de signal et de commande ayant des moyens (16) de détermination de zone de détection qui ont une unité d'interface (18, 20) réglable, configurable et/ou utilisable par un opérateur et destinée à régler et/ou définir, au moins par sections, une limite de la zone de détection dans le plan de mouvement,
les moyens de commande et de traitement de signal ayant des moyens de comparaison (22) qui sont configurés pour comparer un signal de distance et d'angle généré par les moyens détecteurs pour un objet de détection avec des données d'une limite définie ou réglée de la zone de détection qui peut être définie et/ou réglée variablement de manière frontale (32) et latérale (30, 34) dans le plan de mouvement par rapport au boîtier du détecteur,
**caractérisé en ce que**
des moyens (26) d'affichage et/ou de visualisation destinés à afficher et/ou fournir en sortie de manière optique la limite sont associés à l'unité d'interface (18).

2. Dispositif selon la revendication 1,
**caractérisé en ce que**
l'unité d'interface est configurée pour régler une limite de la zone de détection, la limite s'étendant sur un angle d'étendue d'au moins 150°, préférablement d'au moins 170°, dans le plan de mouvement et par rapport au boîtier du détecteur.

3. Dispositif selon la revendication 1 ou 2,
**caractérisé en ce que**
l'unité d'interface est configurée et réglable de telle manière que la limite de la zone de détection a une première section arquée ayant une première forme d'arc et une deuxième section arquée ayant une deuxième forme d'arc différente de la première forme d'arc dans le plan de mouvement.

4. Dispositif selon la revendication 3,
**caractérisé en ce que**
la première et/ou la deuxième forme d'arc est en forme d'un segment circulaire, d'un segment elliptique ou d'un segment d'un paraboloïde.

5. Dispositif selon l'une quelconque des revendications 1 à 4,
**caractérisé en ce que**
l'unité d'interface a au moins deux moyens de réglage (20a, 20b, 20c), notamment des boutons rotatifs ou des boutons coulissants, qui sont utilisables manuellement par l'opérateur et qui sont chacun configuré pour définir une distance maximale de détection le long d'un axe (30, 32, 34) associé s'étendant à partir du boîtier du détecteur dans le plan de mouvement ou parallèle au celui-ci, les au moins deux axes associés formant l'un à l'autre un angle d'au moins 45°, préférablement d'au moins 70°, dans le plan de mouvement.

6. Dispositif selon l'une quelconque des revendications 1 à 5,
**caractérisé en ce que**
l'unité d'interface est configurée et réglable de telle manière que la limite de la zone de détection a au moins une section linéaire dans le plan de mouvement.

7. Dispositif selon la revendication 6,
**caractérisé en ce que**
par rapport au boîtier du détecteur, la limite de la zone de détection a une pluralité de sections linéaires qui sont adjacentes l'une à l'autre, de préférence, de manière rectangulaire ou polygonale.

8. Dispositif selon l'une quelconque des revendications 1 à 7,
**caractérisé en ce que**
les moyens d'affichage ou de visualisation sont configurés pour afficher de manière additionnelle des éléments d'image dans et/ou en dehors de la zone de détection.

9. Dispositif selon l'une quelconque des revendications 1 à 8,
**caractérisé en ce que**
des moyens d'enseignement et/ou de configuration sont associés à l'unité d'interface de telle manière que dans un mode d'enseignement effectué par les moyens d'enseignement ou de configuration, l'unité d'interface détecte et enregistre une voie de mouvement d'une personne dans le plan de mouvement comme limite de la zone de détection.

10. Utilisation du dispositif de détection de mouvement selon l'une quelconque des revendications 1 à 9 dans une lampe murale ou dans une lampe de plafond ou pour commander une telle lampe.
